# EUROPEAN PATENT APPLICATION

(11) **EP 4 541 799 A1**
(43) Date of publication of application: **23.04.2025**
(21) Application number: 22947202.2
(22) Date of filing: 21.06.2022
(51) Int. Cl.: C07F 5/04, H01M 10/0567, H01M 10/0525

(54) **COMPOUND, AND SECONDARY BATTERY, BATTERY MODULE, BATTERY PACK AND ELECTRIC DEVICE COMPRISING SAME**

(71) Applicant: CONTEMPORARY AMPEREX TECHNOLOGY (HONG KONG) LIMITED, Central (HK)
(72) Inventor: ZOU, Hailin, Ningde, Fujian 352100 (CN); CHEN, Peipei, Ningde, Fujian 352100 (CN)
(74) Representative: Gong, Jinping
(86) International application number: PCT/CN2022/100148
(87) International publication number: WO 2023/245422

(57) **Abstract**

This application provides a compound of formula (I), formula (II), or formula (III). The compound has good adsorption ability on the surface of a metal and a substance containing metal ions, and when applied to secondary batteries, can help improve cycling performance and service life of the secondary batteries.

## Description

### TECHNICAL FIELD

This application relates to the field of battery technologies, and in particular, to a compound, a secondary battery containing the same, a battery module, a battery pack, and an electric apparatus.

### BACKGROUND

In recent years, secondary batteries, owing to their high energy density and recyclability, are widely used in energy storage power supply systems such as hydroelectric power plants, thermal power plants, wind power plants, and solar power plants, and in various fields such as electric tools, electric bicycles, electric motorcycles, electric vehicles, military equipment, and aerospace. As secondary batteries have seen remarkable growth and a broad range of applications, higher requirements are imposed on cycling performance, service life, and the like of the secondary batteries.

Consequently, how the cycling performance and service life of the secondary batteries are improved is an urgent technical problem to be solved.

### SUMMARY

This application is made in view of the foregoing technical problems and is intended to provide a compound, a secondary battery containing the same, a battery module, a battery pack, and an electric apparatus. When applied to a secondary battery, the compound can effectively protect the positive electrode active material of the battery, mitigate the leaching of metal ions from the positive electrode active material during battery cycling, and reduce the degradation of capacity and cycle life of the secondary battery caused by the leaching of metal ions from the positive electrode active material, thereby helping to improve the cycling performance and service life of the secondary battery.

According to a first aspect, a compound of formula (I), formula (II), or formula (III) is provided: 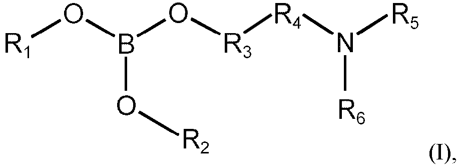 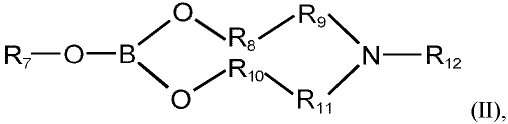 or 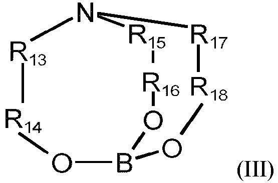 where R1 to R12 are each independently selected from at least one of a halogen atom, an alkyl group having 1 to 20 carbon atoms, a substituted alkyl group having 1 to 20 carbon atoms, an alkenyl group having 2 to 20 carbon atoms, a substituted alkenyl group having 2 to 20 carbon atoms, an aryl group having 6 to 26 carbon atoms, a substituted aryl group having 6 to 26 carbon atoms, a carboxyl group having 1 to 20 carbon atoms, a substituted carboxyl group having 1 to 20 carbon atoms, a carbonyl group having 1 to 20 carbon atoms, a substituted carbonyl group having 1 to 20 carbon atoms, an aryloxy group having 6 to 26 carbon atoms, or a substituted aryloxy group having 6 to 26 carbon atoms; R1, R2, and R5 to R7 are further each independently selected from a hydrogen atom; and R13 to R18 are each independently selected from at least one of a halogen atom, an alkyl group having 1 to 20 carbon atoms, a substituted alkyl group having 1 to 20 carbon atoms, an alkenyl group having 2 to 20 carbon atoms, a substituted alkenyl group having 2 to 20 carbon atoms, an aryl group having 6 to 26 carbon atoms, a substituted aryl group having 6 to 26 carbon atoms, a carboxyl group having 1 to 20 carbon atoms, a substituted carboxyl group having 1 to 20 carbon atoms, a carbonyl group having 1 to 20 carbon atoms, a substituted carbonyl group having 1 to 20 carbon atoms, an aryloxy group having 6 to 26 carbon atoms, or a substituted aryloxy group having 6 to 26 carbon atoms, and at least one of R13 to R18 contains a halogen atom.

In an embodiment of this application, nitrogen-containing borate ester compounds as shown in formula (I), formula (II), and formula (III) are provided. The nitrogen-containing borate ester compounds have strong adsorption ability on the surface of a metal or a substance containing metal ions, and have good oxidation resistance and hydrolysis resistance performance. When applied to secondary batteries, these compounds can utilize its adsorption ability, good oxidation resistance and hydrolysis resistance performance to protect the positive electrode active material of secondary batteries, mitigate the leaching of metal ions in the positive electrode from the positive electrode active material during battery cycling, and reduce the impact of the leaching of metal ions on the cycling capacity and service life of the secondary batteries, thereby improving the cycling stability and service life of the secondary batteries.

In some embodiments, R1 to R18 are each independently selected from at least one of an alkyl group having 1 to 20 carbon atoms, an alkenyl group having 2 to 20 carbon atoms, an aryl group having 6 to 26 carbon atoms, a carboxyl group having 1 to 20 carbon atoms, a carbonyl group having 1 to 20 carbon atoms, or an aryloxy group having 6 to 26 carbon atoms, that is substituted with a halogen atom, a sulfonate group, or a sulfonyl group.

In the embodiments of this application, the introduction of halogen atom into the nitrogen-containing borate ester compounds of formula (I), formula (II), and formula (III) can improve the stability of the compounds, further enhancing the oxidation resistance performance of the compounds; and the introduction of the sulfonate group or sulfonyl group into the compounds can introduce element sulfur into the positive electrode active material, helping to improve the stability of the electrochemical reaction interface of the positive electrode active material.

In some embodiments, R5 and R6 in the compound of formula (I) are not both CₙH₂ₙ₊₁, where 1 ≤ n ≤ 4.

In some embodiments, the compound is selected from at least one of the following substances: 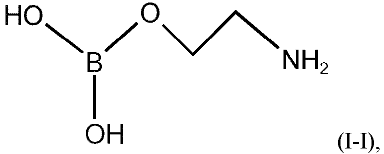 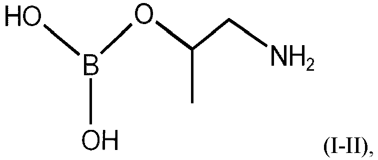 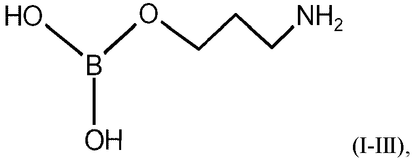 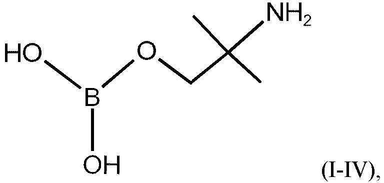 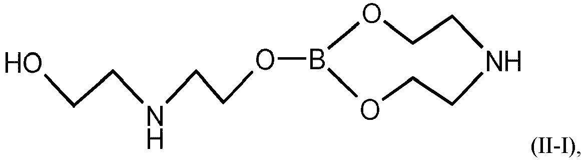 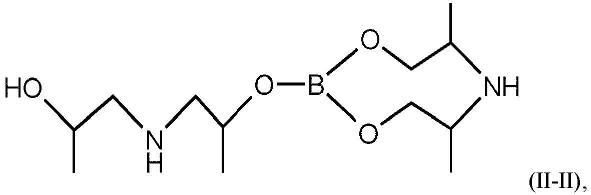 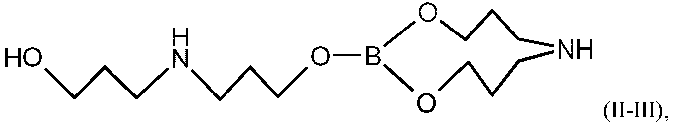 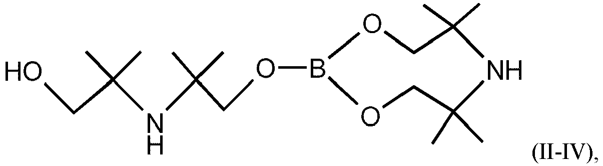 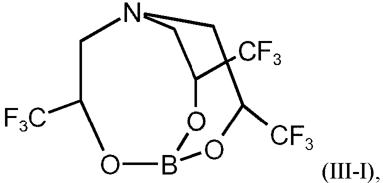 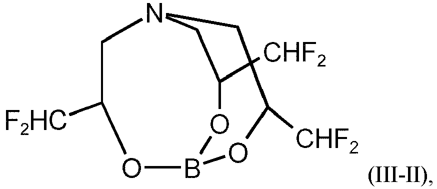 or

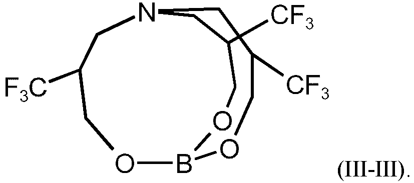

In some embodiments, the compound of formula (III) is a compound having at least one branched chain at R13 to R18, where the branch contains a halogen atom.

In the embodiments of this application, with the provision of the compound having a branched chain at R13 to R18, a large spatial distance between element nitrogen and element boron due to excessive carbon atoms at R13 to R18 is not present in the compound of formula (III) with a cyclic structure, which helps to enhance the stability of the compound. The introduction of halogens into the branched chains can further improve the stability and oxidation resistance performance of the compound.

In some embodiments, the halogen atom on the branched chain of the compound of formula (III) is a fluorine atom.

In the embodiments of this application, introduction of the fluorine atom having the smallest atomic radius and the highest electronegativity among halogens can further enhance the stability and oxidation resistance performance of the nitrogen-containing borate ester compounds.

In some embodiments, the compound is used for secondary batteries.

According to a second aspect, a secondary battery is provided, where the secondary battery includes the compound in any embodiment of the first aspect.

In some embodiments, the secondary battery includes a positive electrode plate, where the positive electrode plate includes a current collector and a positive electrode material layer disposed on the current collector, the positive electrode material layer containing a positive electrode active material and the compound.

In the embodiments of this application, the nitrogen-containing borate ester compound is added to the secondary battery as an additive for the positive electrode material layer, and can adsorb onto the surface of the positive electrode active material and form a protective layer to prevent direct contact between the positive electrode active material and the electrolyte, thereby preventing the leaching of metal ions from the positive electrode active material.

In some embodiments, the positive electrode active material contains a transition metal element.

In some embodiments, the transition metal element includes at least one of titanium, vanadium, chromium, manganese, iron, cobalt, nickel, copper, or zinc.

In some embodiments, the positive electrode active material contains an alkali metal compound, the alkali metal including at least one of lithium, sodium, potassium, or magnesium.

In some embodiments, the compound satisfies the following formula:
0.001 ≤ W₁/S ≤ 10; and preferably, 0.01 ≤ W₁/S ≤ 5;
where S is a specific surface area of the positive electrode active material, in m²/g, and W₁ is a ratio of a mass of the compound to a mass of the positive electrode active material, in wt%.

In the embodiments of this application, an amount of nitrogen-containing borate ester compound used in a secondary battery is set according to a specific surface area of the positive electrode active material. This can effectively avoid the situation that an insufficient usage amount of the nitrogen-containing borate ester compound cannot completely cover the entire surface of the positive electrode active material, resulting that part of the positive electrode active material is still in contact with the electrolyte, leading to metal leaching. In addition, this can effectively avoid the situation that an excessive usage amount of the nitrogen-containing borate ester compound leads to a decrease in the ion conductivity of the positive electrode active material.

In some embodiments, 0.1 m²/g ≤ S ≤ 40 m²/g; and preferably, 0.5 m²/g ≤ S ≤ 20 m²/g.

In the embodiments of this application, setting the range of the specific surface area for the positive electrode active material can control the specific surface area of the positive electrode active material within an appropriate range, avoiding problems such as reduced volumetric density caused by a too-large specific surface area of the positive electrode active material, or insufficient electrochemical reaction interface area of the positive electrode material caused by a too-small specific surface area, and helping to improve the energy density and battery performance of the secondary battery.

In some embodiments, 0.01 wt% ≤ W₁ ≤ 10 wt%; and preferably, 0.05 wt% ≤ W₁ ≤ 5 wt%.

In the embodiments of this application, setting the mass ratio of the nitrogen-containing borate ester compound to the positive electrode active material can control the mass of the nitrogen-containing borate ester compound within an appropriate range according to the mass of the positive electrode active material. This avoids excessive mass of the nitrogen-containing borate ester compound, which would occupy the space and mass of the positive electrode active material, causing a reduction in the capacity of the secondary battery. In addition, this can also avoid the situation that the mass of the nitrogen-containing borate ester compound is too small, and the nitrogen-containing borate ester on the surface of the positive electrode active material is not enough to cover the surface of the positive electrode active material, thus failing to effectively inhibit the metal leaching of the positive electrode active material.

In some embodiments, the secondary battery further includes an electrolyte, the electrolyte containing the compound.

In the embodiments of this application, the addition of the nitrogen-containing borate ester compound to the electrolyte enables the compound to adsorb onto the surface of the positive electrode active material and form a protective layer, thereby isolating direct contact between the positive electrode active material and the electrolyte and effectively avoiding the leaching of metal ions from the positive electrode active material.

In some embodiments, the compound satisfies the following formula:
0.0001 wt% ≤ W₂ ≤ 0.1 wt%; and preferably, 0.001 wt% ≤ W₂ ≤ 0.05 wt%;
where W₂ is a ratio of a mass of the compound to a mass of the electrolyte, in wt%.

In some embodiments, the secondary battery further includes a separator, the separator containing the compound.

In the embodiments of this application, adding the nitrogen-containing borate ester compound to the separator or disposing the film layer formed by the compound on a side of the separator facing the positive electrode active material enables the compound to migrate to the surface of the positive electrode active material through the electrolyte, thereby forming a protective layer on the surface of the positive electrode active material to isolate direct contact between the positive electrode active material and the electrolyte and effectively mitigate the leaching of metal ions from the positive electrode active material.

In some embodiments, a loading amount of the compound on the separator is 0.01 g/m² to 100 g/m²; and preferably 0.1 g/m² to 10 g/m².

According to a third aspect, a battery module is provided, the battery module including the secondary battery according to the second aspect.

According to a fourth aspect, a battery pack is provided, the battery pack including at least one of the secondary battery according to the second aspect or the battery module according to the third aspect.

According to a fifth aspect, an electric apparatus is provided, the electric apparatus including at least one of the secondary battery according to the second aspect, the battery module according to the third aspect, or the battery pack according to the fourth aspect.

According to a sixth aspect, the use of the compound according to any of the embodiments of the first aspect in the preparation of a secondary battery is provided.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts. In the accompanying drawings, the figures are not necessarily drawn to scale.
FIG. 1 is a schematic diagram of a secondary battery according to this application.
FIG. 2 is a schematic structural diagram of a secondary battery according to this application.
FIG. 3 is a schematic structural diagram of a battery module according to this application.
FIG. 4 is a schematic diagram of a battery pack according to this application.
FIG. 5 is a schematic structural diagram of a battery pack according to this application.
FIG. 6 is a schematic diagram of an electric apparatus according to this application.
FIG. 7 is a comparison diagram of cycling performance of batteries between Comparative example 1 and Example 5 of this application.

### DESCRIPTION OF EMBODIMENTS

The following specifically discloses in detail embodiments of the compound, secondary battery containing the same, battery module, battery pack, and electric apparatus of this application, with appropriate reference to the accompanying drawings. However, there may be cases in which unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

In the descriptions of this application, it should be noted that, unless otherwise stated, "plurality" means two or more; and the orientations or positional relationships indicated by the terms "upper", "lower", "left", "right", "inside", "outside", and the like are merely intended to help the descriptions of this application and simplify the descriptions other than indicate or imply that the apparatuses or components must have specific orientations, or be constructed and manipulated with specific orientations, and therefore shall not be construed as limitations on this application. In addition, the terms "first", "second", "third", and the like are merely for the purpose of description and shall not be understood as any indication or implication of relative importance.

"Ranges" disclosed in this application are defined in the form of lower and upper limits. A given range is defined by one lower limit and one upper limit selected, where the selected lower and upper limits define boundaries of that special range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise stated, all the steps in this application can be performed sequentially or randomly, and preferably, are performed sequentially. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise stated, "include" and "contain" mentioned in this application are inclusive or may be exclusive. For example, the terms "include" and "contain" can mean that other unlisted components may also be included or contained, or only listed components are included or contained.

Unless otherwise stated, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Unless otherwise stated, all the technical features and optional technical features of this application can be combined with each other to form new technical solutions.

Unless otherwise stated, the following terms have the following meanings. Any undefined terms have their technically well-known meanings.

"Alkyl group" refers to a monovalent saturated hydrocarbon group having one or more carbon atoms, optionally having 1 to 20 carbon atoms. For example, alkyl groups include linear and branched hydrocarbon groups, such as methyl group (CH₃-), ethyl group (CH₃CH₂-), n-propyl group (CH₃CH₂CH₂-), isopropyl group ((CH₃)₂CH-), n-butyl group (CH₃CH₂CH₂CH₂-), isobutyl group ((CH₃)₂CHCH₂-), sec-butyl group ((CH₃)(CH₃CH₂)CH-), tertiary butyl group ((CH₃)₃C-), n-pentyl group (CH₃CH₂CH₂CH₂CH₂-), neopentyl group ((CH₃)₃CCH₂-), and the like.

"Substituted alkyl group" refers to an alkyl group in which one or more carbon atoms in a linear or branched chain are replaced by any heteroatom or substituent group. For example, heteroatoms include oxygen atoms (-O-), nitrogen atoms (-N-), sulfur atoms (-S-), and the like. Substituent groups include alkoxy group, cycloalkyl group, cycloalkenyl group, acyl group, acylamino group, acyloxy group, amino group, azido group, cyano group, halogen, hydroxyl group, oxo group, thioketo group, carboxyl group, thioaryloxy group, thioheteroaryloxy group, thioheterocyclyloxy group, thiol group, thioalkoxy group, aryl group, aryloxy group, heteroaryl group, heteroarylheterocyclyl group, heterocyclyloxy group, nitro group, -S(O)n- (where n is 0-2), -NR- (where R is hydrogen or alkyl group), -SO-alkyl group, -SO-aryl group, - SO-heteroaryl group, -SOz-alkyl group, -SO₂-aryl group, -SO₂-heteroaryl group, -NRaRb, and the like, where Ra and Rb can be the same or different and are selected from hydrogen and optionally substituted alkyl group, cycloalkyl group, alkenyl group, cycloalkenyl group, alkynyl group, aryl group, heteroaryl group, and heterocyclyl group.

"Alkenyl group" refers to a linear or branched chain hydrocarbon group having one or more carbon atoms and at least one double bond unsaturated site, optionally having 2 to 20 carbon atoms, for example, vinyl group (CH₂=CH-), propenyl group (CH₃CH=CH-), allyl group (CH₂=CH-CH₂-), n-butyl group (-CH₃CH₂CH=CH-), and the like.

"Substituted alkenyl group" refers to an alkenyl group in which one or more carbon atoms in a linear or branched chain are replaced by any heteroatom or substituent group. For example, heteroatoms include oxygen atoms (-O-), nitrogen atoms (-N-), sulfur atoms (-S-), and the like. Substituent groups include alkoxy group, cycloalkyl group, cycloalkenyl group, acyl group, acylamino group, acyloxy group, amino group, azido group, cyano group, halogen, hydroxy group, oxo group, thioketo group, carboxyl group, carboxylalkyl group, thioaryloxy group, thioheteroaryloxy group, thioheterocyclyloxy group, thiol group, thioalkoxy group, aryl group, aryloxy group, heteroaryl group, heteroaryloxy group, heterocyclyl group, heterocyclyloxy group, hydroxyamino group, nitro group, -SO-alkyl group, -SO-substituted alkyl group, -SO-aryl group, -SO-heteroaryl group, -SOz-alkyl group, -SO₂-substituted alkyl group, -SO₂-aryl group, -SO₂-heteroaryl group, and the like.

"Aryl group" or "Ar" refers to an aromatic compound having a single ring or multiple fused rings, optionally having 6 to 26 carbon atoms. For example, aryl groups include phenyl group, naphthyl group, indenyl group, and the like. Aryl groups also include a single ring fused to an aryl group, such as tetrahydronaphthyl group, 2,3-dihydroindanyl group, and the like.

"Substituted aryl group" refers to an aryl group in which at least one or more carbon atoms on the aromatic ring, or at least one or more sites attached to carbon atoms on the aromatic ring, are replaced by a heteroatom or substituent group. Heteroatoms include oxygen atoms (-O-), nitrogen atoms (-N-), sulfur atoms (-S-), and the like. Substituent groups include acyloxy group, hydroxy group, thiol group, acyl group, alkyl group, alkoxy group, alkenyl group, alkynyl group, cycloalkyl group, cycloalkenyl group, amino group, aminoacyl group, acylamino group, alkaryl group, aryl group, aryloxy group, azido group, carboxyl group, carboxylalkyl group, cyano group, halogen, nitro group, heteroaryl group, heteroaryloxy group, heterocyclyl group, heterocyclyloxy group, thioalkoxy group, thioaryloxy group, thioheteroaryloxy group, -SO-alkyl group, -SO-substituted alkyl group, -SO-aryl group, -SO-heteroaryl group, -SOz-alkyl group, - SO₂-aryl group, -SO₂-heteroaryl group, trihalomethyl group, and the like.

"Carboxyl group" refers to a group having one or more carbon atoms and a -CO₂H functional group, optionally having 1 to 20 carbon atoms.

"Substituted carboxyl group" refers to a carboxyl group in which the hydrogen atom of the - CO₂H functional group is replaced by a heteroatom or substituent group. Heteroatoms include oxygen atoms (-O-), nitrogen atoms (-N-), sulfur atoms (-S-), and the like. Substituent groups include alkyl group, alkenyl group, alkynyl group, aryl group, cycloalkyl group, cycloalkenyl group, heteroaryl group, heterocyclyl group, and the like.

"Carbonyl group" refers to a group having one or more carbon atoms and a -CO- functional group, optionally having 1 to 20 carbon atoms.

"Substituted carbonyl group" refers to a carbonyl group in which at least one carbon atom (excluding the carbon atom in the -CO- functional group) is replaced by a heteroatom or substituent group. Heteroatoms include oxygen atoms (-O-), nitrogen atoms (-N-), sulfur atoms (-S-), and the like. Substituent groups include a hydrogen atom, alkyl group, alkenyl group, alkynyl group, aryl group, cycloalkyl group, cycloalkenyl group, heteroaryl group, heterocyclyl group, and the like.

"Aryloxy group" refers to a group in which at least one carbon atom on the aromatic ring of an aryl group is attached to an oxygen atom, optionally having 6 to 26 carbon atoms.

"Substituted aryloxy group" refers to an aryloxy group in which at least one carbon atom is replaced by a heteroatom or substituent group. Substituent groups include acyloxy group, hydroxy group, thiol group, acyl group, alkyl group, alkoxy group, alkenyl group, alkynyl group, cycloalkyl group, cycloalkenyl group, amino group, aminoacyl group, acylamino group, alkaryl group, aryl group, aryloxy group, azido group, carboxyl group, carboxylalkyl group, cyano group, halogen, nitro group, heteroaryl group, heteroaryloxy group, heterocyclyl group, heterocyclyloxy group, thioalkoxy group, thioaryloxy group, thioheteroaryloxy group, -SO-alkyl group, -SO-substituted alkyl group, -SO-aryl group, -SO-heteroaryl group, -SO₂-alkyl group, -SO₂-aryl group, -SO₂-heteroaryl group, trihalomethyl group, and the like.

"Halogen atom" refers to fluorine (F), chlorine (Cl), bromine (Br), iodine (I), and astatine (At).

"Sulfonate group" refers to -SO₃H.

"Sulfonyl group" refers to R-S(=O)₂-, where R includes a hydrogen atom, alkyl group, alkenyl group, alkynyl group, aryl group, cycloalkyl group, cycloalkenyl group, heteroaryl group, heterocyclyl group, and the like.

Next, various embodiments of this application are introduced.

In recent years, secondary batteries have been widely used in many fields such as electric tools, electronic products, electric vehicles, and aerospace due to their high energy density and long service life, leading to significant progress. Generally, a secondary battery includes a positive electrode plate, a negative electrode plate, an electrolyte, and a separator. During charging and discharging of the battery, active ions are intercalated and released back and forth between the positive electrode plate and the negative electrode plate. The electrolyte conducts ions between the positive electrode plate and the negative electrode plate. The separator is disposed between the positive electrode plate and the negative electrode plate to allow ions to pass through while preventing short circuit between positive and negative electrodes, enabling normal electrochemical reactions in the secondary battery.

In this application, the lithium-ion battery is taken as an example. The lithium-ion battery is a typical secondary battery. Because the lithium-ion battery relies on the chemical reaction of lithium ions intercalating and deintercalating between the positive and negative electrodes for charging and discharging, the lithium-ion battery is also known as a rocking-chair battery. During charging of the lithium-ion battery, lithium ions are released from the positive electrode, transported through the electrolyte, and intercalated into the negative electrode active material; and during discharging, lithium ions are released from the negative electrode, transported through the electrolyte, and intercalated into the positive electrode active material.

It should be understood that a process of "lithium intercalation" and "intercalatation" mentioned in this application refers to a process in which lithium ions are intercalated into the positive electrode active material or the negative electrode active material due to electrochemical reactions, and a process of "release", "lithium deintercalation", and "deintercalation" mentioned in this application refer to a process in which lithium ions are released from the positive electrode active material or the negative electrode active material due to electrochemical reactions.

It should be understood that the lithium-ion battery is only one example of the secondary battery, and the secondary battery described in this application may alternatively be a sodium-ion battery, a potassium-ion battery, a magnesium-ion battery, or the like.

The positive electrode active material of the lithium-ion battery usually uses a lithium-containing transition metal oxide, a lithium-containing transition metal compound, or a composite containing the foregoing substance. However, positive electrode active materials containing transition metals inevitably undergo the leaching of metal ions in the electrochemical environment. The leaching of metal ions from the positive electrode active material can damage the structural stability of the positive electrode material layer, leading to a decrease in battery capacity. In addition, the leached metal ions can migrate and deposit on the surface of the negative electrode material layer, damaging the electronic insulation properties of the negative electrode and catalyzing the decomposition of the SEI (Solid electrolyte interphase, SEI) film on the surface of the negative electrode, which results in continuous consumption of the electrolyte and continuous generation of the SEI film during electrochemical reactions, leading to a significant loss of active lithium ions and severely damaging the service life of the battery.

**In** view of this, using the positive electrode active material containing transition metal oxides as an example, the inventors have studied the reasons for metal leaching from the positive electrode active material and found that the leaching of metal ions from the positive electrode active material is directly related to the stability of oxygen ions on the surface of the positive electrode active material. In the lattice structure of the positive electrode active material, transition metal ions interact with oxygen ions to stably exist in voids formed from accumulation of oxygen ions. When oxygen ions on the surface of the positive electrode active material are affected by the external environment and detach from the surface of the positive electrode active material, their binding effect on transition metal ions are lost, causing the transition metal ions to migrate to the electrolyte under the action of the electric field, that is, the leaching of transition metal ions. The external environment beyond the surface of the positive electrode active material is mainly determined by the electrolyte. The electrolyte can undergo oxidation reactions on the surface of the positive electrode active material or react with trace amounts of water in the battery, both of which can lead to the formation of acidic species. In an acidic environment, oxygen ions on the surface of the positive electrode active material are prone to detach from the surface of the positive electrode material, leading to the leaching of transition metal ions from the positive electrode active material.

In view of this, an embodiment of this application provides a compound, having a structure of nitrogen-containing borate ester compounds as shown in formula (I), formula (II), and formula (III). The nitrogen-containing borate ester compounds have strong adsorption ability on the surface of a metal or a substance containing metal ions, and have good oxidation resistance and hydrolysis resistance performance. When applied to secondary batteries, the compound can adsorb onto the surface of the positive electrode active material containing transition metal ions, thereby isolating direct contact between the positive electrode active material and the electrolyte. Preventing direct contact between the positive electrode active material and the electrolyte reduces the impact of the external environment beyond the surface of the positive electrode active material on the positive electrode active material, effectively inhibiting the leaching of transition metal ions from the positive electrode active material and thereby helping to enhance the cycling performance and service life of the secondary battery.

First, an embodiment of this application provides a compound of formula (I), formula (II), or formula (III): 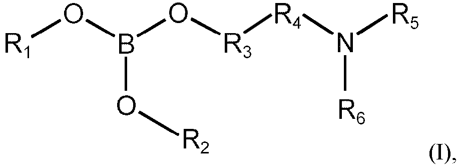 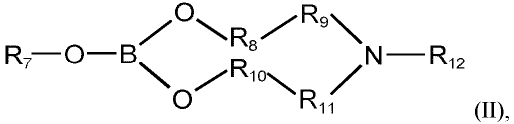 or 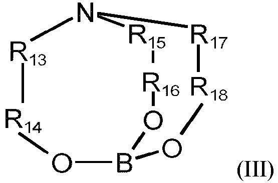 where R1 to R12 are each independently selected from at least one of a halogen atom, an alkyl group having 1 to 20 carbon atoms, a substituted alkyl group having 1 to 20 carbon atoms, an alkenyl group having 2 to 20 carbon atoms, a substituted alkenyl group having 2 to 20 carbon atoms, an aryl group having 6 to 26 carbon atoms, a substituted aryl group having 6 to 26 carbon atoms, a carboxyl group having 1 to 20 carbon atoms, a substituted carboxyl group having 1 to 20 carbon atoms, a carbonyl group having 1 to 20 carbon atoms, a substituted carbonyl group having 1 to 20 carbon atoms, an aryloxy group having 6 to 26 carbon atoms, or a substituted aryloxy group having 6 to 26 carbon atoms; R1, R2, and R5 to R7 are further each independently selected from a hydrogen atom; and R13 to R18 are each independently selected from at least one of a halogen atom, an alkyl group having 1 to 20 carbon atoms, a substituted alkyl group having 1 to 20 carbon atoms, an alkenyl group having 2 to 20 carbon atoms, a substituted alkenyl group having 2 to 20 carbon atoms, an aryl group having 6 to 26 carbon atoms, a substituted aryl group having 6 to 26 carbon atoms, a carboxyl group having 1 to 20 carbon atoms, a substituted carboxyl group having 1 to 20 carbon atoms, a carbonyl group having 1 to 20 carbon atoms, a substituted carbonyl group having 1 to 20 carbon atoms, an aryloxy group having 6 to 26 carbon atoms, or a substituted aryloxy group having 6 to 26 carbon atoms, and at least one of R13 to R18 contains a halogen atom.

Specifically, compounds of formula (I), formula (II), or formula (III) all belong to nitrogen-containing borate ester compounds. Nitrogen-containing borate ester compounds refer to a class of compounds in which nitrogen elements are introduced into borate ester compounds. Borate ester compounds have characteristics such as corrosion resistance, anti-static, bactericidal, and non-toxic properties, and are widely used as lubricant additives and key intermediates in active pharmaceutical ingredients. In addition, nitrogen-containing borate esters can have strong adsorption ability on metal surfaces, and are therefore commonly used as metal rust inhibitors. Conventional borate ester compounds, due to the sp2 hybridization of element boron within them, possess an empty p-orbital that is susceptible to attack by functional groups containing lone electron pairs, rendering borate ester compounds susceptible to decomposition or hydrolysis. However, in a nitrogen-containing borate ester compound, element nitrogen (N) is introduced into the borate ester compound. Element nitrogen (N) can form N-B intramolecular coordination bonds or chelate-coordination bonds with element boron (B) to fill the empty p-orbital of element boron (B), effectively enhancing the stability of the compound. In addition, the formation of bonds between element nitrogen (N) and element boron (B) avoids the presence of unbonded lone electron pairs on element nitrogen (N) and improves the oxidation resistance performance of the compound.

Therefore, the nitrogen-containing borate ester compounds provided in this embodiment, as shown in formula (I), formula (II), and formula (III), have strong adsorption ability on the surface of metals or substances containing metal ions, and possess good oxidation resistance and hydrolysis resistance performance. When applied to secondary batteries, the nitrogen-containing borate ester compounds can adsorb onto the surface of the positive electrode active material to effectively isolate direct contact between the positive electrode active material and the electrolyte, preventing the acid in the electrolyte from damaging the stability of oxygen ions on the surface of the positive electrode active material and thereby effectively inhibiting the leaching of transition metal ions from the positive electrode active material. This improves the situation that the structure of the positive electrode material layer is damaged or the insulation and SEI film on the surface of the negative electrode material layer are damaged due to the leaching of transition metal ions, effectively enhancing the cycling performance of the secondary battery while extending the service life of the secondary battery.

Optionally, in some embodiments, R1 to R18 are each independently selected from at least one of an alkyl group having 1 to 20 carbon atoms, an alkenyl group having 2 to 20 carbon atoms, an aryl group having 6 to 26 carbon atoms, a carboxyl group having 1 to 20 carbon atoms, a carbonyl group having 1 to 20 carbon atoms, or an aryloxy group having 6 to 26 carbon atoms, that is substituted with a halogen atom, a sulfonate group, or a sulfonyl group.

Specifically, in compounds of formula (I) and formula (II), the introduction of halogen or pseudo-halogen groups into R1 to R12 can further improve the stability, oxidation resistance, and hydrolysis resistance performance of borate ester compounds. In a compound of formula (III), on the basis that R13 to R18 contain at least one halogen atom, a pseudo-halogen group such as a sulfonate group or a sulfonyl group can also be introduced into R13 to R18, which can introduce element sulfur into the electrochemical reaction interface of the positive electrode active material, thereby improving the stability of the electrochemical reaction interface of the positive electrode active material.

In this embodiment, the introduction of halogen or pseudo-halogen groups into the nitrogen-containing borate ester compound can enhance the stability, oxidation resistance performance, and hydrolysis resistance performance of the compound. When applied to secondary batteries, the compound can exist more stably on the surface of the positive electrode active material to mitigate the leaching of transition metals from the positive electrode active material, providing more effective protection for the positive electrode active material and thereby helping to improve the cycling performance and service life of the secondary battery.

Optionally, in some embodiments, R5 and R6 in the compound of formula (I) are not both CₙH₂ₙ₊₁, where 1 ≤ n ≤ 4.

Optionally, in some embodiments, the compound is selected from at least one of the compounds of formula (I-I), formula (I-II), formula (I-III), formula (I-IV), formula (II-I), formula (II-II), formula (II-III), formula (II-IV), formula (III-I), formula (III-II), or formula (III-III), that is, from at least one of monoethanolamine borate, monoisopropanolamine borate, mono-n-propanolamine borate, monoisobutanolamine borate, diethanolamine borate, diisopropanolamine borate, di-n-propanolamine borate, diisobutanolamine borate, tri(trifluoroisopropanol)amine cyclic borate, tridifluoroisopropanolamine cyclic borate, or tri(trifluoroisobutanol)amine cyclic borate: 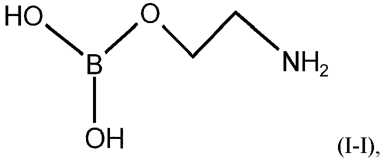 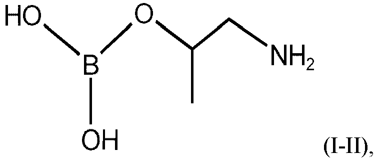 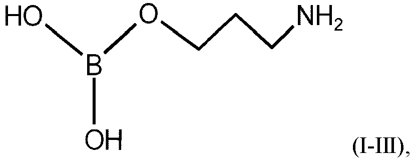 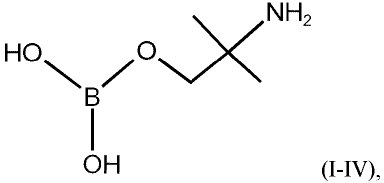 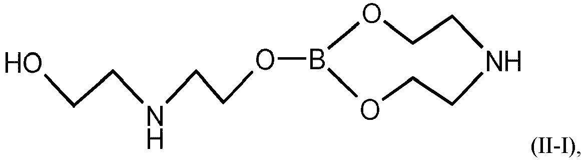 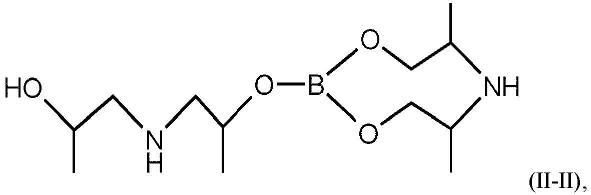 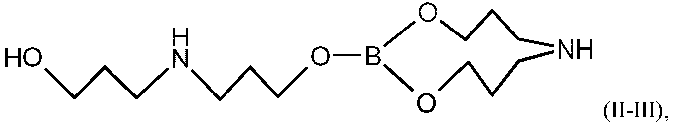 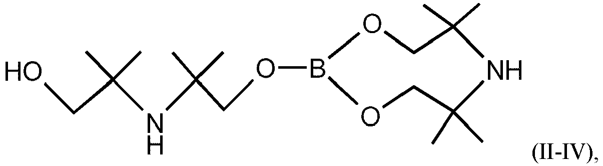 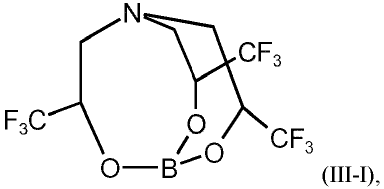 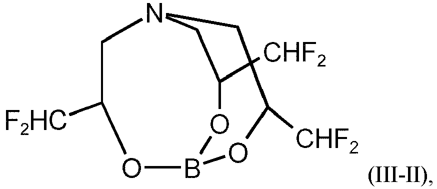 or

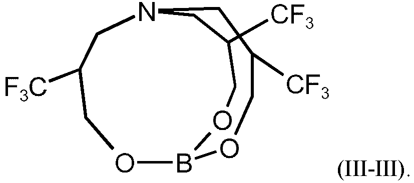

It should be understood that the various compounds of formula (I), formula (II), and formula (III) provided in the embodiments of this application are merely examples and should not be construed as limitations on the compounds of this application.

Optionally, in some embodiments, the compound of formula (III) has at least one branched chain at R13 to R18, where the branched chain contains a halogen atom.

Specifically, the compound of formula (III) has at least one branched chain at R13 to R18. For example, the compound of formula (III) can have a branched chain at at least one of R13 and R14, a branched chain at at least one of R15 and R16, or a branched chain at at least one of R17 and R18. Preferably, the compound of formula (III) has a branched chain at one of R13 or R14, one of R15 or R16, and one of R17 or R18. In other words, the compound of formula (III) has multiple branched chains, each of which contains a halogen atom. When each of these branched chains contains a halogen atom, the halogen atoms contained in the branched chains may be the same or different.

It should be understood that "the branched chain contains a halogen atom" may mean that a halogen atom is present on only the branched chains at R13 to R18 contains, or that a halogen atom is present at sites of R13 to R18 and the branched chains of R13 to R18.

In this embodiment, for the compound of formula (III) with a cyclic structure, designing branched chains between element nitrogen (N) and element boron (B) can avoid a large spatial distance between element nitrogen (N) and element boron (B), which would otherwise cause a decrease in the coordination bond strength between element nitrogen (N) and element boron (B), thereby helping to enhance the stability and oxidation resistance performance of the compound. In addition, the introduction of halogen into the branched chains can further improve the stability and oxidation resistance performance of the compound by introducing more halogen atoms when a halogen atom is present at at least one site of R13 to R18.

Optionally, the number of halogen atoms on each branched chain is 1 to 5. Optionally, in some embodiments, the halogen atom on the branched chain of the compound of formula (III) is a fluorine atom.

Specifically, the tri(trifluoroisopropanol)amine cyclic borate listed in the embodiments of this application has branched chains at R14, R16, and R18, and each branched chain contains 3 fluorine atoms.

In this embodiment, the introduction of a fluorine atom having the highest electronegativity among halogens into the branched chains of the compound of formula (III) can further improve the stability and oxidation resistance performance of the compound. Preferably, fluorine atoms are introduced into all three chains of the compound of formula (III). The compound of formula (III) has a cyclic structure, and the introduction of fluorine atoms into all its three chains enables each branched chain to be highly stable, reducing the occurrence of ring opening. In addition, the number of fluorine atoms in the three branched chains is not more than 5. Due to the strong interaction between halogens and lithium ions, controlling the number of fluorine atoms introduced into the branched chains can reduce the impact of the compound adsorbed onto the surface of the positive electrode active material on the lithium-ion transmission efficiency when the compound is applied to secondary batteries, thereby helping to improve the lithium-ion transmission efficiency.

Optionally, in some embodiments, the compound is used for secondary batteries. The following describes a secondary battery, a battery module, a battery pack, and an electric apparatus of this application with appropriate reference to the accompanying drawings.

In an embodiment of this application, a secondary battery is provided. Generally, a secondary battery includes a positive electrode plate, a negative electrode plate, an electrolyte, and a separator.

### [Positive electrode plate]

The positive electrode plate generally includes a positive electrode current collector and a positive electrode material layer provided on at least one surface of the positive electrode current collector, and the positive electrode material layer includes a positive electrode active material.

In an example, the positive electrode current collector has two opposite surfaces in a thickness direction thereof, and the positive electrode material layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

Optionally, in some embodiments, the positive electrode material layer contains a transition metal element. The transition metal element includes at least one of titanium, vanadium, chromium, manganese, iron, cobalt, nickel, copper, or zinc.

Optionally, in some embodiments, the positive electrode material layer contains an alkali metal compound, the alkali metal including at least one of lithium, sodium, potassium, or magnesium.

It should be understood that the "inhibiting the leaching of metal ions" described in this application refers to inhibiting the leaching of metal ions from the positive electrode active material other than active metal ions, for example, inhibiting the leaching of transition metal ions from the positive electrode active material. Taking the lithium-ion battery as an example, for a lithium-ion battery using lithium iron phosphate as the positive electrode active material, inhibiting the leaching of metal ions refers to inhibiting the leaching of iron ions.

In some embodiments, the positive electrode active material may be a positive electrode active material well known in the art and used for batteries. For example, the positive electrode active material may include at least one of the following materials: olivine-structured lithium-containing phosphate, lithium transition metal oxide, or respective modified compounds thereof. However, this application is not limited to such materials, and may alternatively use other conventional materials that can be used as positive electrode active materials for batteries. One type of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel aluminum cobalt oxide (for example, LiNi_{0.8}Co_{0.15}Al_{0.05}O₂), or modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, or a composite material of lithium manganese iron phosphate and carbon.

In some embodiments, the positive electrode material layer further optionally contains a binder. In an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylate resin.

In some embodiments, the positive electrode material layer optionally contains a conductive agent. In an example, the conductive agent may include at least one of superconducting carbon, acetylene black, carbon black, Ketjen black, carbon dots, carbon nanotubes, graphene, or carbon nanofibers.

Optionally, in some embodiments, the positive electrode material layer further contains an additive, for example, the compound in any embodiment of this application.

Specifically, the nitrogen-containing borate ester compound provided in this application can be used as an additive for the positive electrode material layer. In the secondary battery containing the compound, the compound can dissolve in the electrolyte, move through the electrolyte, and adsorb onto the surface of the positive electrode active material, forming a protective layer on the surface of the positive electrode active material, thereby isolating direct contact between the positive electrode active material and the electrolyte.

In the embodiments, the nitrogen-containing borate ester compound is applied to the secondary battery as an additive for the positive electrode material layer, and can dissolve in the electrolyte and adsorb onto the surface of the positive electrode active material to form a protective layer. This can prevent direct contact between the positive electrode active material and the electrolyte, thereby effectively preventing the leaching of metal ions from the positive electrode active material and helping to improve the cycling performance and service life of the secondary battery.

Optionally, in some embodiments, the compound used as an additive for the positive electrode material layer satisfies the following formula:
0.001 ≤ W₁/S ≤ 10; and preferably, 0.01 ≤ W₁/S ≤ 5;
where S is a specific surface area of the positive electrode active material (m²/g), and W₁ is a ratio of a mass of the compound to a mass of the positive electrode active material (wt%).

Specifically, W₁/S may be 0.001, 0.002, 0.003, 0.004, 0.005, 0.006, 0.007, 0.008, 0.009, 0.01, 0.02, 0.03, 0.04, 0.05, 0.06, 0.07, 0.08, 0.09, 0.1, 0.2, 0.3, 0.4, 0.5, 0.6, 0.7, 0.8, 0.9, 1, 2, 3, 4, 5, 6, 7, 8, 9, or 10, or the value thereof falls within a range defined by any two of these values.

When the nitrogen-containing borate ester compound is applied to the secondary battery to the secondary battery as an additive for the positive electrode material layer, its usage amount can be set according to the specific surface area of the positive electrode active material. The essence of the nitrogen-containing borate ester compound mitigating the metal leaching from the positive electrode active material lies in that the compound adsorb onto the surface of the positive electrode active material to isolate direct contact between the positive electrode active material and the electrolyte. Therefore, the specific surface area of the positive electrode active material is positively correlated with the usage amount of the compound as an additive for the positive electrode material layer. In other words, a larger specific surface area of the positive electrode active material requires a larger usage amount of the compound. In addition, when the specific surface area of the positive electrode active material is fixed, increasing the usage amount of the compound does not necessarily lead to better performance. For example, when W₁/S < 0.001, this indicates that the specific surface area of the positive electrode active material is large, but the usage amount of the compound is small. In this case, the surface of the positive electrode active material is not completely covered by the compound, causing part of the positive electrode active material to still be exposed to and in direct contact with the electrolyte, so that the leaching of metal ions from the positive electrode active material cannot be effectively inhibited. For another example, when W₁/S > 10, this indicates that the specific surface area of the positive electrode active material is small, but the usage amount of the compound is large. In this case, a large amount of the compound adsorbs onto the surface of the positive electrode active material, impairing the conductivity of lithium ions on the surface of the positive electrode active material and increasing the internal resistance of the secondary battery. Therefore, it is necessary to adjust the usage amount of the compound as an additive for the positive electrode material layer according to the specific surface area S of different positive electrode active materials, to ensure the effectiveness of the compound in inhibiting the leaching of metal ions.

In the embodiments, the usage amount of the compound as an additive for the positive electrode material layer is controlled within an appropriate range according to the specific surface area of the positive electrode active material, which can effectively enhance the effectiveness of the compound in inhibiting the leaching of metal ions, helping to improve the cycling performance and service life of the secondary battery.

Optionally, in some embodiments, 0.1 m²/g ≤ S ≤ 40 m²/g; and preferably, 0.5 m²/g ≤ S ≤ 20 m²/g.

Specifically, S may be 0.1 m²/g, 0.2 m²/g, 0.3 m²/g, 0.4 m²/g, 0.5 m²/g, 0.6 m²/g, 0.7 m²/g, 0.8 m²/g, 0.9 m²/g, 1 m²/g, 2 m²/g, 3 m²/g, 4 m²/g, 5 m²/g, 6 m²/g, 7 m²/g, 8 m²/g, 9 m²/g, 10 m²/g, 12 m²/g, 14 m²/g, 16 m²/g, 18 m²/g, 20 m²/g, 22 m²/g, 24 m²/g, 26 m²/g, 28 m²/g, 30 m²/g, 32 m²/g, 34 m²/g, 36 m²/g, 38 m²/g, or 40 m²/g, or the value thereof falls within a range defined by any two of these values.

The specific surface area S of the positive electrode active material in the secondary battery also needs to be set within an appropriate range. For example, when S < 0.1, the specific surface area S of the positive electrode active material is too small, resulting in an insufficient interface area for electrochemical reactions on the surface of the positive electrode active material, which impairs the capacity of the secondary battery. When S > 40, the specific surface area S of the positive electrode active material is too large, impairing the compacted density of the positive electrode plate, which thereby impairs the volumetric density of the secondary battery. Therefore, it is necessary to set the specific surface area S of the positive electrode active material within an appropriate range to ensure the capacity and performance of the secondary battery.

In the embodiments, setting the range of the specific surface area S for the positive electrode active material can control the specific surface area S of the positive electrode active material within an appropriate range, avoiding problems such as reduced volumetric density caused by a too-large specific surface area S of the positive electrode active material, or insufficient electrochemical reaction interface area of the positive electrode active material caused by a too-small specific surface area S, and helping to improve the energy density and battery performance of the secondary battery.

Optionally, in some embodiments, 0.01 wt% ≤ W₁ ≤ 10 wt%; and preferably, 0.05 wt% ≤ W₁ ≤ 5 wt%.

Specifically, W₁ may be 0.01 wt%, 0.02 wt%, 0.03 wt%, 0.04 wt%, 0.05 wt%, 0.06 wt%, 0.07 wt%, 0.08 wt%, 0.09 wt%, 0.1 wt%, 0.2 wt%, 0.3 wt%, 0.4 wt%, 0.5 wt%, 0.6 wt%, 0.7 wt%, 0.8 wt%, 0.9 wt%, 1 wt%, 2 wt%, 3 wt%, 4 wt%, 5 wt%, 6 wt%, 7 wt%, 8 wt%, 9 wt%, or 10 wt%, or the value thereof falls within a range defined by any two of these values.

When the nitrogen-containing borate ester compound provided in this application is used as an additive for the positive electrode material layer, the usage amount of the compound can also be adjusted according to the mass of the positive electrode active material, so that the mass ratio W₁ of the compound to the positive electrode active material is within an appropriate range. For example, when W₁ < 0.01, this indicates that the mass ratio of the compound in the positive electrode active material is too small and that the usage amount is too small, which results in the surface of the positive electrode active material not being completely covered by the compound, thereby impairing the effectiveness of the compound in inhibiting the leaching of metal ions. For another example, when W₁ > 10, this indicates that the mass ratio of the compound in the positive electrode active material is too large, that is, the usage amount is too much. Since the compound is present in the secondary battery only as an additive for the positive electrode active material and does not participate in the electrochemical reaction of the positive electrode to contribute capacity, the excessive usage amount of the compound leads to a reduction in the energy density of the secondary battery.

In the embodiments, setting the mass ratio of the nitrogen-containing borate ester compound to the positive electrode active material within an appropriate range can further enhance the effectiveness of the compound in inhibiting the metal leaching from the positive electrode active material.

Optionally, in some other implementations, the compound can also be applied to the positive electrode of the secondary battery in various manners, such as being added as an additive to a slurry for the positive electrode material, coating the surface of the positive electrode active material, or forming an independent film layer on the surface of the positive electrode plate with the positive electrode active material. When disposed as an independent film layer on the surface of the positive electrode active material, the film layer has a thickness of generally not more than 10 µm.

Specifically, the nitrogen-containing borate ester compound provided in this application can form an independent film layer directly disposed on the surface of the positive electrode material. For example, a substance containing the compound can be used as a coating applied to the surface of the positive electrode material to form a film layer containing the compound. This avoids direct contact between the positive electrode active material and the electrolyte, thereby effectively mitigating the problem of the leaching of metal ions from the positive electrode active material and helping to improve the cycling performance and service life of the secondary battery.

In some embodiments, the positive electrode plate may be prepared in the following manner: the foregoing constituents used for preparing the positive electrode plate, for example, the positive electrode active material, the conductive agent, the binder, the additive and any other constituent, are dispersed in a solvent (for example, N-methylpyrrolidone) to produce a positive electrode slurry; and the positive electrode slurry is applied onto the positive electrode current collector, followed by processes such as drying and cold pressing to obtain a positive electrode plate.

### [Negative electrode plate]

The negative electrode plate generally includes a negative electrode current collector and a negative electrode material layer disposed on at least one surface of the negative electrode current collector, and the negative electrode material layer contains a negative electrode active material.

In an example, the negative electrode current collector has two opposite surfaces in a thickness direction thereof, and the negative electrode material layer is disposed on either or both of the two opposite surfaces of the negative electrode current collector.

In some embodiments, the negative electrode current collector may be a metal foil or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a negative electrode active material well known in the art and used for batteries. In an example, the negative electrode active material may include at least one of the following materials: artificial graphite, natural graphite, soft carbon, hard carbon, silicon-based materials, tin-based materials, lithium titanate, or the like. The silicon-based material may be selected from at least one of elemental silicon, silicon-oxygen compounds, silicon-carbon composites, silicon-nitrogen composites, or silicon alloys. The tin-based material may be selected from at least one of elemental tin, tin-oxygen compounds, or tin alloys. However, this application is not limited to these materials, but may use other conventional materials that can be used as negative electrode active materials for batteries instead. One of these negative electrode active materials may be used alone, or two or more of them may be used in combination.

In some embodiments, the negative electrode material layer further optionally contains a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), or carboxymethyl chitosan (CMCS).

In some embodiments, the negative electrode material layer optionally contains a conductive agent. The conductive agent may be selected from at least one of superconducting carbon, acetylene black, carbon black, Ketjen black, carbon dots, carbon nanotubes, graphene, or carbon nanofiber.

In some embodiments, the negative electrode material further optionally includes other additives, such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain a negative electrode plate.

### [Electrolyte]

An electrolyte conducts ions between a positive electrode plate and a negative electrode plate. The electrolyte is not specifically limited to any particular type in this application, and may be selected based on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonate, lithium difluorophosphate, lithium difluorooxalatoborate, lithium bisoxalatoborate, lithium difluorobisoxalate phosphate, or lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, or diethyl sulfone.

In some embodiments, the liquid electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

Optionally, in some embodiments, the electrolyte contains the compound. Specifically, the nitrogen-containing borate ester compound can be applied to the secondary battery as an additive of the liquid electrolyte. The compound in the electrolyte can move and adsorb on the surface of the positive electrode active material to form a protective layer, thereby isolating direct contact between the positive electrode active material and the electrolyte and effectively mitigating the problem of metal leaching from the positive electrode active material.

Optionally, in some embodiments, when the compound is used as an electrolyte additive, the compound satisfies the following formula:
0.0001 wt% ≤ W₂ ≤ 0.1 wt%; and preferably, 0.001 wt% ≤ W₂ ≤ 0.05 wt%;
where W₂ is a ratio of a mass of the compound to a mass of the electrolyte.

Specifically, W₂ may be 0.0001 wt%, 0.0002 wt%, 0.0003 wt%, 0.0004 wt%, 0.0005 wt%, 0.0006 wt%, 0.0007 wt%, 0.0008 wt%, 0.0009 wt%, 0.001 wt%, 0.002 wt%, 0.003 wt%, 0.004 wt%, 0.005 wt%, 0.006 wt%, 0.007 wt%, 0.008 wt%, 0.009 wt%, 0.01 wt%, 0.02 wt%, 0.03 wt%, 0.04 wt%, 0.05 wt%, 0.06 wt%, 0.07 wt%, 0.08 wt%, 0.09 wt%, or 0.1 wt%, or the value thereof falls within a range defined by any two of these values.

### [Separator]

In some embodiments, the secondary battery further includes a separator. The separator is not particularly limited in type in this application and may be any well-known porous separator with good chemical stability and mechanical stability.

In some embodiments, a material of the separator may be selected from at least one of glass fiber, non-woven fabric, polyethylene, polypropylene, or polyvinylidene fluoride. The separator may be a separation film. The separation film may be a single-layer film or a multi-layer composite film, and is not particularly limited. When the separation film is a multi-layer composite film, all layers may be made of the same or different materials, which is not particularly limited.

Optionally, in some embodiments, the separator contains the compound. Specifically, the nitrogen-containing borate ester compound can be applied to the secondary battery as a separator additive or as a coating on the surface of the separator. For example, when the compound is used as an additive of the separation film, the separator prepared contains the compound. Thus, in the secondary battery, the compound in the separator can dissolve in the electrolyte, then move and adsorb onto the surface of the positive electrode active material to form a protective layer, thereby isolating direct contact between the positive electrode active material and the electrolyte. For another example, when used as a coating on the surface of the separator, the compound is applied to the side of the separator facing the positive electrode plate. Thus, in the secondary battery, the compound in the separator can alternatively diffuse through the electrolyte, move and adsorb onto the surface of the positive electrode active material to form a protective layer, thereby isolating direct contact between the positive electrode active material and the electrolyte.

In the embodiments, the addition of the compound to the separator or the provision of the coating containing the compound on a side of the separator facing the positive electrode plate enables the compound to form a protective layer on the surface of the positive electrode active material, thereby effectively mitigate the problem of the leaching of metal ions from the positive electrode active material.

Optionally, in some embodiments, a loading amount of the compound on the separator is 0.01 g/m² to 100 g/m²; and preferably 0.1 g/m² to 10 g/m².

Specifically, the loading amount of the compound on the separator may be 0.01 g/m², 0.02 g/m², 0.03 g/m², 0.04 g/m², 0.05 g/m², 0.06 g/m², 0.07 g/m², 0.08 g/m², 0.09 g/m², 0.1 g/m², 0.2 g/m², 0.3 g/m², 0.4 g/m², 0.5 g/m², 0.6 g/m², 0.7 g/m², 0.8 g/m², 0.9 g/m², 1 g/m², 2 g/m², 3 g/m², 4 g/m², 5 g/m², 6 g/m², 7 g/m², 8 g/m², 9 g/m², 10 g/m², 15 g/m², 20 g/m², 25 g/m², 30 g/m², 35 g/m², 40 g/m², 45 g/m², 50 g/m², 55 g/m², 60 g/m², 65 g/m², 70 g/m², 75 g/m², 80 g/m², 85 g/m², 90 g/m², 95 g/m², or 100 g/m², or the value thereof falls within a range defined by any two of these values.

In some embodiments, the positive electrode plate, the negative electrode plate, and the separation film may be made into an electrode assembly through winding or stacking.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft package, for example, a soft pouch. The material of the soft package may be plastic, which, for example, may be polypropylene, polybutylene terephthalate, and polybutylene succinate.

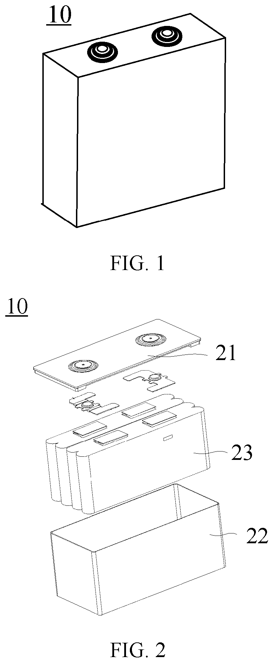

The secondary battery is not particularly limited in shape in this application and may be cylindrical, rectangular, or of any other shape. For example, FIG. 1 shows a secondary battery 10 of a rectangular structure as an example.

In some embodiments, referring to FIG. 2, the outer package may include a housing 21 and a cover plate 22. The housing 21 may include a base plate and side plates connected to the base plate, and the base plate and the side plates enclose an accommodating cavity. The housing 21 has an opening communicating with the accommodating cavity, and the cover plate 22 can cover the opening to close the accommodating cavity. A positive electrode plate, a negative electrode plate, and a separation film may be made into an electrode assembly 23 through winding or stacking. The electrode assembly 23 is packaged in the accommodating cavity. The liquid electrolyte infiltrates the electrode assembly 23. The secondary battery 10 may include one or more electrode assemblies 23, and persons skilled in the art may make choices according to actual requirements.

In some embodiments, the secondary battery 10 may be assembled into a battery module, and the battery module may include one or more secondary batteries 10. The specific quantity may be chosen by persons skilled in the art according to use and capacity of the battery module.

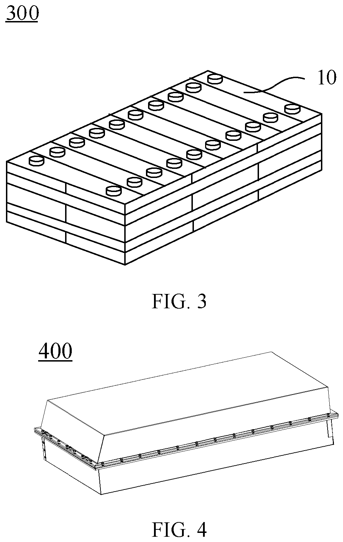

FIG. 3 shows a battery module 300 as an example. Referring to FIG. 3, in the battery module 300, a plurality of secondary batteries 10 may be sequentially arranged in a length direction of the battery module 300. Certainly, the secondary batteries may alternatively be arranged in any other manners. Further, the plurality of secondary batteries 10 may be fastened using fasteners.

Optionally, in an embodiment, the battery module 300 may further include a shell with an accommodating space, and the plurality of secondary batteries 300 are accommodated in the accommodating space.

Optionally, in an embodiment, the battery module 300 may be further assembled into a battery pack, and the battery pack may include one or more battery modules 300. The specific quantity may be chosen by persons skilled in the art according to use and capacity of the battery pack.

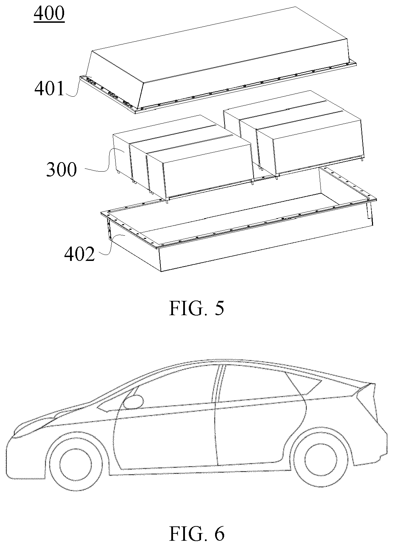

FIG. 4 and FIG. 5 show a battery pack 400 as an example. Referring to FIG. 4 and FIG. 5, the battery pack 400 may include a battery box and a plurality of battery modules 300 arranged in the battery box. The battery box includes an upper box body 401 and a lower box body 402. The upper box body 401 can cover the lower box body 402 to form an enclosed space for accommodating the battery modules 300. The plurality of battery modules 300 may be arranged in the battery box in any manner.

FIG. 6 is a schematic diagram of an electric apparatus 600 provided in this application.

It should be understood that the electric apparatus 600 includes at least one of the secondary battery 10, battery module 300, or battery pack 400 provided in this application. The secondary battery 10, the battery module 300, or the battery pack 400 may be used as a power source of the electric apparatus 600 or an energy storage unit of the electric apparatus 600. The electric apparatus 600 may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery 10, the battery module 300, or the battery pack 400 may be selected for the electric apparatus 600 based on requirements for using the electric apparatus 600.

In an example, the electric apparatus 600 is shown in FIG. 6. The electric apparatus 600 is a battery electric vehicle, a hybrid electric vehicle, a plug-in hybrid electric vehicle, or the like. To satisfy requirements of the electric apparatus 600 for high power and high energy density of the secondary battery 10, the battery pack 400 or the battery module 300 may be used.

In another example, the electric apparatus 600 may be a mobile phone, a tablet computer, a notebook computer, or the like. Such apparatus is generally required to be light and thin and may use the secondary battery 10 as its power source.

In addition, an embodiment of this application further provides the use of the compound in preparation of secondary batteries.

### Example

The following describes examples of this application. The examples described below are illustrative and only used to explain this application, and cannot be construed as limitations on this application. Examples whose technical solutions or conditions are not specified are made in accordance with technical solutions or conditions described in literature in the field, or made in accordance with product instructions. The reagents or instruments used are all conventional products that are commercially available if no manufacturer is indicated.
(1) Synthesis of compounds of formula (I), formula (II), and formula (III)
   (1.1) Synthesis of a compound of formula (I-I) (monoethanolamine borate)
      In a flask equipped with a Dean-Stark apparatus and a thermometer, 12 g of ethanolamine and 12 g of boric acid were added, heated to 90°C, and stirred well to completely dissolve the boric acid in the ethanolamine. Stirring was continued while the temperature was slowly raised to 135°C and maintained at this temperature for 5 hours to obtain monoethanolamine borate.
   (1.2) Synthesis of a compound of formula (II-I) (diethanolamine borate)
      In a flask equipped with a Dean-Stark apparatus and a thermometer, 44 g of diethanolamine and 12 g of boric acid were added, then toluene was added to form a mixture. The mixture was heated to 120°C and stirred to dissolve the boric acid. The reaction temperature was then controlled at 130°C for approximately 4 hours. Water generated by the reaction was taken out by the toluene and removed from the reaction system through the Dean-Stark apparatus. As the reaction proceeded and the water generated by the reaction was removed, the reaction liquid in the system gradually became increasingly viscous. After the toluene was removed by distillation, diethanolamine borate was obtained.
   (1.3) Synthesis of a compound of formula (III-I) (tri(trifluoroisopropanol)amine cyclic borate)
      In a flask equipped with a Dean-Stark apparatus and a thermometer, 70 g of tri(trifluoroisopropanol)amine cyclic borate and 12 g of boric acid were added, then toluene was added to form a mixture. The mixture was heated to 130°C and stirred to dissolve the boric acid. The reaction temperature was then controlled at 130°C for approximately 8 hours. Water generated by the reaction was taken out by the toluene and removed from the reaction system through the Dean-Stark apparatus. As the reaction proceeded and the water generated by the reaction was removed, the reaction liquid in the system gradually became increasingly viscous. After the toluene was removed by distillation, tri(trifluoroisopropanol)amine cyclic borate was obtained.
(2) Preparation of secondary battery
   (2.1) Preparation of positive electrode plate

Positive electrode plate 1: Positive electrode active material lithium manganate with D_{V}50 of 5 µm, conductive agent acetylene black, and binder polyvinylidene fluoride (PVDF) at a mass ratio of 90:5:5 were dissolved in solvent N-methylpyrrolidone (NMP) to form a mixture; the mixture was fully stirred and mixed well to obtain a positive electrode slurry; then the positive electrode slurry was uniformly applied onto the positive electrode current collector aluminum foil, followed by drying, cold pressing, and slitting, to obtain positive electrode plate 1. A specific surface area of the positive electrode material in positive electrode plate 1 was 1.1 m²/g. It should be understood that D_{V}50 is a particle size corresponding to a cumulative volume distribution percentage of particles in the positive electrode active material reaching 50%.

Positive electrode plate 2: Positive electrode active material lithium manganate with D_{V}50 of 5 µm, conductive agent acetylene black, binder polyvinylidene fluoride (PVDF), and a compound of formula (II-I) (diethanolamine borate) at a mass ratio of 89.99:5:5:0.01 were dissolved in solvent N-methylpyrrolidone (NMP) to form a mixture; the mixture was fully stirred and mixed well to obtain a positive electrode slurry; then the positive electrode slurry was uniformly applied onto the positive electrode current collector aluminum foil, followed by drying, cold pressing, and slitting, to obtain positive electrode plate 2. A specific surface area of the positive electrode material in positive electrode plate 2 was 1.1 m²/g.

Positive electrode plate 3: Positive electrode active material lithium manganate with D_{V}50 of 5 µm, conductive agent acetylene black, binder polyvinylidene fluoride (PVDF), and a compound of formula (II-I) (diethanolamine borate) at a mass ratio of 89:5:5:1 were dissolved in solvent N-methylpyrrolidone (NMP) to form a mixture; the mixture was fully stirred and mixed well to obtain a positive electrode slurry; then the positive electrode slurry was uniformly applied onto the positive electrode current collector aluminum foil, followed by drying, cold pressing, and slitting, to obtain positive electrode plate 3. A specific surface area of the positive electrode material in positive electrode plate 3 was 1.1 m²/g.

Positive electrode plate 4: Positive electrode active material lithium manganate with D_{V}50 of 5 µm, conductive agent acetylene black, binder polyvinylidene fluoride (PVDF), and a compound of formula (II-I) (diethanolamine borate) at a mass ratio of 80:5:5:10 were dissolved in solvent N-methylpyrrolidone (NMP) to form a mixture; the mixture was fully stirred and mixed well to obtain a positive electrode slurry; then the positive electrode slurry was uniformly applied onto the positive electrode current collector aluminum foil, followed by drying, cold pressing, and slitting, to obtain positive electrode plate 4. A specific surface area of the positive electrode material in positive electrode plate 4 was 1.1 m²/g.

Positive electrode plate 5: Positive electrode active material lithium manganate with D_{V}50 of 5 µm, conductive agent acetylene black, binder polyvinylidene fluoride (PVDF), and a compound of formula (II-I) (diethanolamine borate) at a mass ratio of 89:5:5:1 were dissolved in solvent N-methylpyrrolidone (NMP) to form a mixture; the mixture was fully stirred and mixed well to obtain a positive electrode slurry; then the positive electrode slurry was uniformly applied onto the positive electrode current collector aluminum foil, followed by drying, cold pressing, and slitting, to obtain positive electrode plate 5. A specific surface area of the positive electrode material in positive electrode plate 5 was 50 m²/g.

Positive electrode plate 6: Positive electrode active material lithium manganate with D_{V}50 of 5 µm, conductive agent acetylene black, binder polyvinylidene fluoride (PVDF), and a compound of formula (II-I) (diethanolamine borate) at a mass ratio of 89:5:5:1 were dissolved in solvent N-methylpyrrolidone (NMP) to form a mixture; the mixture was fully stirred and mixed well to obtain a positive electrode slurry; then the positive electrode slurry was uniformly applied onto the positive electrode current collector aluminum foil, followed by drying, cold pressing, and slitting, to obtain positive electrode plate 6. A measured specific surface area of the positive electrode material in positive electrode plate 6 was 0.05 m²/g.

Positive electrode plate 7: Positive electrode active material lithium manganate with D_{V}50 of 5 µm, conductive agent acetylene black, binder polyvinylidene fluoride (PVDF), and a compound of formula (I-I) (monoethanolamine borate) at a mass ratio of 89:5:5:1 were dissolved in solvent N-methylpyrrolidone (NMP) to form a mixture; the mixture was fully stirred and mixed well to obtain a positive electrode slurry; then the positive electrode slurry was uniformly applied onto the positive electrode current collector aluminum foil, followed by drying, cold pressing, and slitting, to obtain positive electrode plate 7. A measured specific surface area of the positive electrode material in positive electrode plate 7 was 1.1 m²/g.

Positive electrode plate 8: Positive electrode active material lithium manganate with D_{V}50 of 5 µm, conductive agent acetylene black, binder polyvinylidene fluoride (PVDF), and a compound of formula (III-I) (tri(trifluoroisopropanol)amine cyclic borate) at a mass ratio of 89:5:5:1 were dissolved in solvent N-methylpyrrolidone (NMP) to form a mixture; the mixture was fully stirred and mixed well to obtain a positive electrode slurry; then the positive electrode slurry was uniformly applied onto the positive electrode current collector aluminum foil, followed by drying, cold pressing, and slitting, to obtain positive electrode plate 8. A specific surface area of the positive electrode material in positive electrode plate 8 was 1.1 m²/g.

Positive electrode plate 9: Positive electrode active material Na_{0.85}Ni_{0.25}Mn_{0.75}O₂ with D_{V}50 of 12 µm, conductive agent acetylene black, and binder polyvinylidene fluoride (PVDF) at a mass ratio of 90:5:5 were dissolved in solvent N-methylpyrrolidone (NMP) to form a mixture; the mixture was fully stirred and mixed well to obtain a positive electrode slurry; then the positive electrode slurry was uniformly applied onto the positive electrode current collector aluminum foil, followed by drying, cold pressing, and slitting, to obtain positive electrode plate 9. A specific surface area of the positive electrode material in positive electrode plate 9 was 0.8 m²/g.

Positive electrode plate 10: Positive electrode active material Na_{0.85}Ni_{0.25}Mn_{0.75}O₂ with D_{V}50 of 12 µm, conductive agent acetylene black, binder polyvinylidene fluoride (PVDF), and a compound of formula (II-I) (diethanolamine borate) at a mass ratio of 89:5:5:1 were dissolved in solvent N-methylpyrrolidone (NMP) to form a mixture; the mixture was fully stirred and mixed well to obtain a positive electrode slurry; then the positive electrode slurry was uniformly applied onto the positive electrode current collector aluminum foil, followed by drying, cold pressing, and slitting, to obtain positive electrode plate 10. A specific surface area of the positive electrode material in positive electrode plate 10 was 0.8 m²/g.

### (2.2) Preparation of negative electrode plate

Negative electrode plate 1: Negative electrode active material artificial graphite, conductive agent acetylene black, binder styrene-butadiene rubber (SBR), and a thickener sodium carboxymethyl cellulose (CMC) at a mass ratio of 90:4:4:2 were dissolved in solvent deionized water to form a mixture; the mixture was mixed well to obtain a negative electrode slurry; then the negative electrode slurry was uniformly applied onto the negative electrode current collector copper foil once or multiple times, followed by drying, cold pressing, and slitting, to obtain negative electrode plate 1.

Negative electrode plate 2: Negative electrode active material hard carbon, conductive agent acetylene black, binder styrene-butadiene rubber (SBR), and a thickener sodium carboxymethyl cellulose (CMC) at a mass ratio of 90:4:4:2 were dissolved in solvent deionized water to form a mixture; the mixture was mixed well to obtain a negative electrode slurry; then the negative electrode slurry was uniformly applied onto the negative electrode current collector copper foil once or multiple times, followed by drying, cold pressing, and slitting, to obtain negative electrode plate 2.

### (2.3) Preparation of separation film

Separation film 1: Al₂O₃ powder and a binder at a ratio of 99:1 were dispersed in water to obtain a slurry, then the slurry was applied onto a PE separation film, and separation film 1 was obtained after drying.

Separation film 2: A compound of formula (II-I) (diethanolamine borate), Al₂O₃ powder, and a binder at a ratio of 10:89:1 were dispersed in water to obtain a slurry, then the slurry was applied onto a PE separation film, and separation film 2 was obtained after drying.

### (2.4) Preparation of liquid electrolyte

Liquid electrolyte 1: In an argon environment, organic solvents EC and EMC at a volume ratio of 3:7 were mixed well, added with LiPF₆ at a mass ratio of 12.5% to dissolve in the organic solvents, and added with VC at a mass ratio of 2% as an additive to form a mixture; and the mixture was mixed well to obtain liquid electrolyte 1.

Liquid electrolyte 2: In an argon environment, organic solvents EC and EMC at a volume ratio of 3:7 were mixed well, added with LiPF₆ at a mass ratio of 12.5% to dissolve in the organic solvents, and added with VC at a mass ratio of 2% and a compound of formula (II-I) (diethanolamine borate) at a mass ratio of 1.5% as additives to form a mixture; and the mixture was mixed well to obtain liquid electrolyte 2.

Liquid electrolyte 3: Organic solvents EC and EMC at a volume ratio of 3:7 were mixed well, added with NaPF₆ at a mass ratio of 13.8% to dissolve in the organic solvents, and added with VC at a mass ratio of 2% as an additive to form a mixture; and the mixture was mixed well to obtain liquid electrolyte 3.

### (2.5) Assembly of secondary battery

The positive electrode plate, the separation film, and the negative electrode plate were sequentially stacked, with the separation film located between the positive electrode plate and the negative electrode plate to separate them; the stacked components were then rolled up to form an electrode assembly, also known as a cell; the cell was placed inside a battery housing and dried before the liquid electrolyte was injected; and secondary batteries in different examples and comparative examples were obtained after processes such as formation and standing. Each secondary battery prepared had a mass of the positive electrode material of 450 g, a mass of the liquid electrolyte of 150 g, and a separation film of 2.4 m².

Comparative example 1: A secondary battery was obtained as Comparative example 1 by assembling positive electrode plate 1, separation film 1, negative electrode plate 1, and liquid electrolyte 1 according to the foregoing method.

Example 1: A secondary battery was obtained as Example 1 by assembling positive electrode plate 2, separation film 1, negative electrode plate 1, and liquid electrolyte 1 according to the foregoing method.

Example 2: A secondary battery was obtained as Example 2 by assembling positive electrode plate 3, separation film 1, negative electrode plate 1, and liquid electrolyte 1 according to the foregoing method.

Example 3: A secondary battery was obtained as Example 3 by assembling positive electrode plate 4, separation film 1, negative electrode plate 1, and liquid electrolyte 1 according to the foregoing method.

Example 4: A secondary battery was obtained as Example 4 by assembling positive electrode plate 5, separation film 1, negative electrode plate 1, and liquid electrolyte 1 according to the foregoing method.

Example 5: A secondary battery was obtained as Example 6 by assembling positive electrode plate 6, separation film 1, negative electrode plate 1, and liquid electrolyte 1 according to the foregoing method.

Example 6: A secondary battery was obtained as Example 6 by assembling positive electrode plate 1, separation film 1, negative electrode plate 1, and liquid electrolyte 2 according to the foregoing method.

Example 7: A secondary battery was obtained as Example 7 by assembling positive electrode plate 1, separation film 2, negative electrode plate 1, and liquid electrolyte 1 according to the foregoing method.

Example 8: A secondary battery was obtained as Example 8 by assembling positive electrode plate 7, separation film 1, negative electrode plate 1, and liquid electrolyte 1 according to the foregoing method.

Example 9: A secondary battery was obtained as Example 9 by assembling positive electrode plate 8, separation film 1, negative electrode plate 1, and liquid electrolyte 1 according to the foregoing method.

Example 10: A secondary battery was obtained as Example 10 by assembling positive electrode plate 9, separation film 1, negative electrode plate 2, and liquid electrolyte 3 according to the foregoing method.

Example 11: A secondary battery was obtained as Example 1 by assembling positive electrode plate 10, separation film 1, negative electrode plate 2, and liquid electrolyte 3 according to the foregoing method.

Product parameters of different examples were given in Table 1.

**Table 1: Product parameters of a comparative example and different examples**

| No. | Battery system | Positive electrode plate | Negative electrode plate | Liquid electrolyte | Separation film | S (m²/g) | Nitrogen-containing borate ester additive | W₁ (%) | W₁/S |
|---|---|---|---|---|---|---|---|---|---|
| Comparative example 1 | Lithium-ion battery | Positive electrode 1 | Negative electrode 1 | Liquid electrolyte 1 | Separation film 1 | 1.1 | / | / | / |
| Example 1 | Lithium-ion battery | Positive electrode 2 | Negative electrode 1 | Liquid electrolyte 1 | Separation film 1 | 1.1 | Diethanolamine borate | 0.01 | 0.009 |
| Example 2 | Lithium-ion battery | Positive electrode 3 | Negative electrode 1 | Liquid electrolyte 1 | Separation film 1 | 1.1 | Diethanolamine borate | 1 | 0.909 |
| Example 3 | Lithium-ion battery | Positive electrode 4 | Negative electrode 1 | Liquid electrolyte 1 | Separation film 1 | 1.1 | Diethanolamine borate | 10 | 9.091 |
| Example 4 | Lithium-ion battery | Positive electrode 5 | Negative electrode 1 | Liquid electrolyte 1 | Separation film 1 | 50 | Diethanolamine borate | 1 | 0.020 |
| Example 5 | Lithium-ion battery | Positive electrode 6 | Negative electrode 1 | Liquid electrolyte 1 | Separation film 1 | 0.05 | Diethanolamine borate | 1 | 20.000 |
| Example 6 | Lithium-ion battery | Positive electrode 1 | Negative electrode 1 | Liquid electrolyte 2 | Separation film 1 | 1.1 | Diethanolamine borate | 1 | 0.909 |
| Example 7 | Lithium-ion battery | Positive electrode 1 | Negative electrode 1 | Liquid electrolyte 1 | Separation film 2 | 1.1 | Diethanolamine borate | 0.5 | 0.455 |
| Example 8 | Lithium-ion battery | Positive electrode 7 | Negative electrode 1 | Liquid electrolyte 1 | Separation film 1 | 1.1 | Monoethanolamine borate | 1 | 0.909 |
| Example 9 | Lithium-ion battery | Positive electrode 8 | Negative electrode 1 | Liquid electrolyte 1 | Separation film 1 | 1.1 | Tri(trifluoroisopropanol)amin e cyclic borate | 1 | 0.909 |
| Example 10 | Sodium-ion battery | Positive electrode 9 | Negative electrode 2 | Liquid electrolyte 3 | Separation film 1 | 0.8 | / | / | / |
| Example 11 | Sodium-ion battery | Positive electrode 10 | Negative electrode 2 | Liquid electrolyte 3 | Separation film 1 | 0.8 | Diethanolamine borate | 1 | 1.250 |

Next, the testing process of relevant parameters is explained.

### (3) Battery performance test

### (3.1) Volumetric energy density test

At 25°C, a secondary battery was charged to 4.2 V at a constant current of 1C, then charged at a constant voltage of 4.2 V until the current was less than 0.05C, and then discharged at 0.33C to 2.8 V. In this way, a discharge energy Q was obtained. A vernier caliper was used to measure the length, width, and height of the cell, and calculate the volume V. Thus, the volumetric energy density (Q/V) was calculated.

### (3.2) Test for cell internal resistance

Test for internal resistance of lithium-ion battery: At 25°C, a lithium-ion battery was charged to 4.3 V at a constant current of 1C, then charged at a constant voltage of 4.3 V until the current was less than 0.05C, and then discharged at 1C for 30 minutes so that the power of the cell was adjusted to 50% SOC; then, positive and negative test leads of a TH2523A AC internal resistance tester were made into contact with positive and negative electrodes of the battery, respectively, and an internal resistance value (mΩ) of the battery was read through the internal resistance tester.

Test for internal resistance of sodium-ion battery: At 25°C, a sodium-ion battery was charged to 4.2V at a constant current of 1C, then charged at a constant voltage of 4.2V until the current was less than 0.05C, and then discharged at 1C for 30 minutes so that the power of the cell was adjusted to 50% SOC; then, positive and negative test leads of a TH2523A AC internal resistance tester were made into contact with positive and negative electrodes of the battery, respectively, and an internal resistance value of the battery was read through the internal resistance tester.

### (3.3) Test for battery cycling performance at 45°C

Lithium-ion battery: At 45°C, a lithium-ion battery was charged to 4.3 V at a constant current of 1C, then charged at a constant voltage of 4.3 V until the current was less than 0.05C, and then discharged to 3.0 V at a constant current of 1C. This was one charge-discharge cycle. Charging and discharging were performed as such repeatedly. A capacity retention rate of the lithium-ion battery after 500 cycles was calculated. Capacity retention rate (%) of lithium-ion battery after 500 cycles = (discharge capacity at the 500-th cycle/discharge capacity at the first cycle) × 100%.

Sodium-ion battery: At 45°C, a lithium-ion battery was charged to 4.2V at a constant current of 1C, then charged at a constant voltage of 4.2 V until the current was less than 0.05C, and then discharged to 2.0 V at a constant current of 1C. This was one charge-discharge cycle. Charging and discharging were performed as such repeatedly. A capacity retention rate of the sodium-ion battery after 500 cycles was calculated. Capacity retention rate (%) of sodium-ion battery after 500 cycles = (discharge capacity at the 500-th cycle/discharge capacity at the first cycle) × 100%.

### (3.4) Measurement of concentration of transition metals in negative electrode after battery cycling at 45°C

The lithium-ion battery and the sodium-ion battery after 500 cycles at 45°C were disassembled, their negative electrode plates were removed, and the concentration of transition metals in each of the negative electrode plates was measured using inductively coupled plasma atomic emission spectroscopy with reference to EPA 6010D-2014.

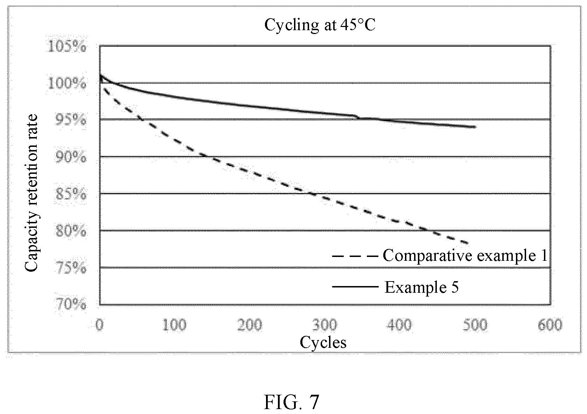

Battery performance tests were performed on the Comparative example 1 and Examples 1 to 11 prepared according to the foregoing method, with results shown in Table 2. FIG. 7 shows curves of measured battery cycling performance of Comparative example 1 and Example 5 after 500 cycles at 45°C.

**Table 2: Performance test results of a comparative example and different examples**

| No. | Volumetric energy density (Wh/L) | Initial cell internal resistance (mΩ) | Capacity retention rate after 500 cycles at 45°C (%) | Concentration of transition metals in negative electrode after 500 cycles at 45°C (ppm) |
|---|---|---|---|---|
| Comparative example 1 | 440 | 28 | 78% | 1250 |
| Example 1 | 440 | 29 | 82% | 950 |
| Example 2 | 438 | 30 | 92% | 500 |
| Example 3 | 420 | 53 | 93% | 300 |
| Example 4 | 380 | 21 | 86% | 710 |
| Example 5 | 410 | 64 | 94% | 230 |
| Example 6 | 438 | 30 | 91% | 460 |
| Example 7 | 438 | 30 | 92% | 450 |
| Example 8 | 438 | 31 | 91% | 490 |
| Example 9 | 438 | 32 | 92% | 495 |
| Example 10 | 360 | 18 | 71% | 680 |
| Example 11 | 359 | 18 | 82% | 320 |

From comparisons of Comparative example 1 with Example 1, Example 8, and Example 9, it can be seen that the introduction of the nitrogen-containing borate ester compound provided in this application into the positive electrode material of lithium-ion batteries can significantly reduce the concentration of transition metals in the negative electrode, indicating that it effectively inhibits the leaching of transition metal ions from the positive electrode material. In addition, the capacity retention rate after 500 cycles in Example 1 is significantly increased, proving that the introduction of the compound into lithium-ion batteries can effectively improve the cycling performance of the lithium-ion batteries, thereby extending the service life of the lithium-ion batteries.

From comparisons in Example 1 to Example 5, it can be seen that controlling the usage amount of the compound within an appropriate range based on the specific surface area of the positive electrode material can further improve its performance in inhibiting the leaching of metal ions from the positive electrode material, thereby further improving the cycling performance and service life of the lithium-ion batteries.

From comparisons of Comparative example 1 with Example 6 and Example 7, it can be seen that the introduction of the nitrogen-containing borate ester compound provided in this application into the separation film and liquid electrolyte of lithium-ion batteries can also significantly reduce the concentration of transition metals in the negative electrode, effectively inhibiting the leaching of metal ions from the positive electrode material, helping to improve the cycling performance and service life of the lithium-ion batteries.

From comparison of Example 10 with Example 11, it can be seen that the introduction of the nitrogen-containing borate ester compound provided in this application into the positive electrode material of sodium-ion batteries can also significantly reduce the leaching of metal ions from the positive electrode material in the sodium-ion batteries, effectively improving the cycling performance and service life of the sodium-ion batteries.

In summary, the introduction of the nitrogen-containing borate ester compound of formula (I), formula (II), or formula (III) provided in this application into secondary batteries can effectively inhibit the leaching of metal ions from the positive electrode material, reducing the impact of the leaching of metal ions on the cycling capacity and service life of the secondary batteries, thereby improving the cycling stability and service life of the secondary batteries.

As can be clearly seen from FIG. 7, the lithium-ion battery containing the compound of formula (II-I) provided in this application has a capacity retention rate of up to 94% after 500 cycles at 45°C; while the lithium-ion battery without the compound of formula (II-I) provided in this application has a capacity retention rate of only 78% after 500 cycles at 45°C. This further proves that the nitrogen-containing borate ester compound provided in this application has beneficial effects on the cycling performance and service life of secondary batteries.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A compound of formula (I), formula (II) or formula (III): 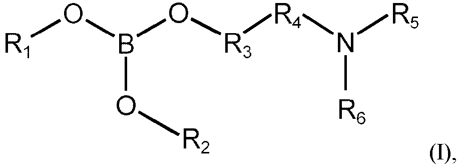 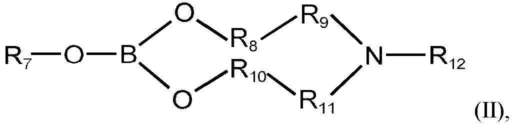 or 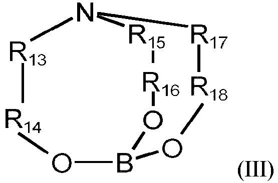 wherein R1 to R12 are each independently selected from at least one of a halogen atom, an alkyl group having 1 to 20 carbon atoms, a substituted alkyl group having 1 to 20 carbon atoms, an alkenyl group having 2 to 20 carbon atoms, a substituted alkenyl group having 2 to 20 carbon atoms, an aryl group having 6 to 26 carbon atoms, a substituted aryl group having 6 to 26 carbon atoms, a carboxyl group having 1 to 20 carbon atoms, a substituted carboxyl group having 1 to 20 carbon atoms, a carbonyl group having 1 to 20 carbon atoms, a substituted carbonyl group having 1 to 20 carbon atoms, an aryloxy group having 6 to 26 carbon atoms, or a substituted aryloxy group having 6 to 26 carbon atoms; R1, R2, and R5 to R7 are further each independently selected from a hydrogen atom; and R13 to R18 are each independently selected from at least one of a halogen atom, an alkyl group having 1 to 20 carbon atoms, a substituted alkyl group having 1 to 20 carbon atoms, an alkenyl group having 2 to 20 carbon atoms, a substituted alkenyl group having 2 to 20 carbon atoms, an aryl group having 6 to 26 carbon atoms, a substituted aryl group having 6 to 26 carbon atoms, a carboxyl group having 1 to 20 carbon atoms, a substituted carboxyl group having 1 to 20 carbon atoms, a carbonyl group having 1 to 20 carbon atoms, a substituted carbonyl group having 1 to 20 carbon atoms, an aryloxy group having 6 to 26 carbon atoms, or a substituted aryloxy group having 6 to 26 carbon atoms, and at least one of R13 to R18 contains a halogen atom.

2. The compound according to claim 1, wherein R1 to R18 are each independently selected from at least one of an alkyl group having 1 to 20 carbon atoms, an alkenyl group having 2 to 20 carbon atoms, an aryl group having 6 to 26 carbon atoms, a carboxyl group having 1 to 20 carbon atoms, a carbonyl group having 1 to 20 carbon atoms, or an aryloxy group having 6 to 26 carbon atoms, that is substituted with a halogen atom, a sulfonate group, or a sulfonyl group.

3. The compound according to claim 1 or 2, wherein R5 and R6 in the compound of formula (I) are not both CₙH₂ₙ₊₁, wherein 1 ≤ n ≤ 4.

4. The compound according to any one of claims 1 to 3, wherein the compound is selected from at least one of the following substances: 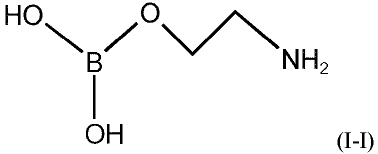 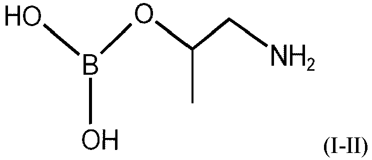 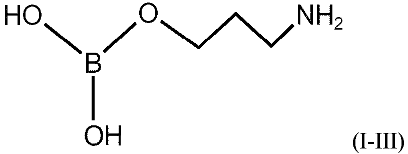 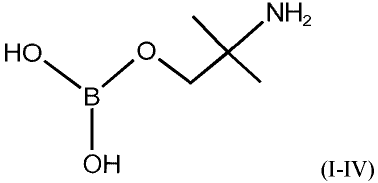 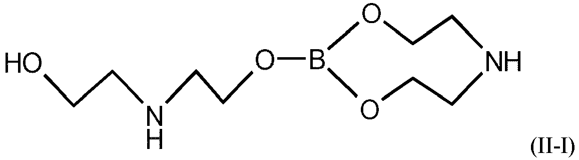 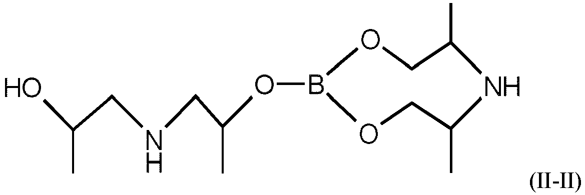 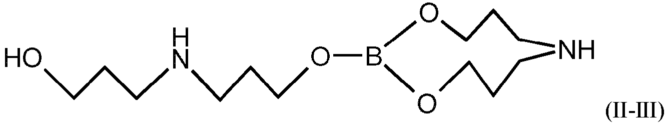 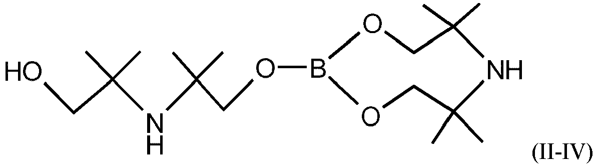 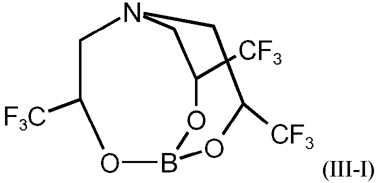 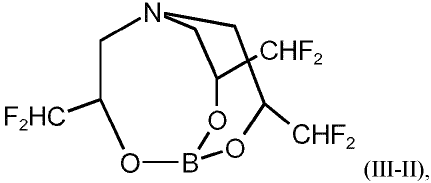 or

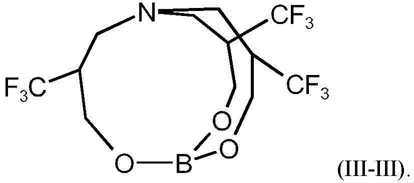

5. A secondary battery, wherein the secondary battery comprises the compound according to any of claims 1 to 4.

6. The secondary battery according to claim 5, wherein the secondary battery comprises a positive electrode plate, wherein the positive electrode plate comprises a current collector and a positive electrode material layer disposed on the current collector, the positive electrode material layer containing a positive electrode active material and the compound.

7. The secondary battery according to claim 6, wherein the positive electrode active material contains a transition metal element.

8. The secondary battery according to claim 7, wherein the transition metal element comprises at least one of titanium, vanadium, chromium, manganese, iron, cobalt, nickel, copper, or zinc.

9. The secondary battery according to claim 6, wherein the positive electrode active material contains an alkali metal compound, the alkali metal comprising at least one of lithium, sodium, potassium, or magnesium.

10. The secondary battery according to any one of claims 5 to 9, wherein the compound satisfies the following formula:
0.001 ≤ W₁/S ≤ 10; and preferably, 0.01 ≤ W₁/S ≤ 5;
wherein S is a specific surface area of the positive electrode active material, in m²/g, and W₁ is a ratio of a mass of the compound to a mass of the positive electrode active material, in wt%.

11. The secondary battery according to claim 10, wherein 0.1 m²/g ≤ S ≤ 40 m²/g; and preferably, 0.5 m²/g ≤ S ≤ 20 m²/g.

12. The secondary battery according to claim 10, wherein 0.01 wt% ≤ W₁ ≤ 10 wt%; and preferably, 0.05 wt% ≤ W₁ ≤ 5 wt%.

13. The secondary battery according to claim 5, wherein the secondary battery further comprises an electrolyte, the electrolyte containing the compound.

14. The secondary battery according to claim 13, wherein the compound satisfies the following formula:
0.0001 wt% ≤ W₂ ≤ 0.1 wt%; and preferably, 0.001 wt% ≤ W₂ ≤ 0.05 wt%;
wherein W₂ is a ratio of a mass of the compound to a mass of the electrolyte, in wt%.

15. The secondary battery according to claim 5, wherein the secondary battery further comprises a separator, the separator containing the compound.

16. The secondary battery according to claim 15, wherein a loading amount of the compound on the separator is 0.01 g/m² to 100 g/m²; and preferably 0.1 g/m² to 10 g/m².

17. A battery module, wherein the battery module comprises the secondary battery according to any of claims 5 to 16.

18. A battery pack, wherein the battery pack comprises at least one of the secondary battery according to claim 17 or the battery module according to claim 28.

19. An electric apparatus, wherein the electric apparatus comprises at least one of the secondary battery according to any one of claims 5 to 16, the battery module according to claim 17, or the battery pack according to claim 18.

20. The use of the compound according to any of claims 1 to 4 in preparation of secondary batteries.
